# EUROPEAN PATENT APPLICATION

(11) **EP 0 697 643 A1**
(43) Date of publication of application: **21.02.1996**
(21) Application number: 95650022.7
(22) Date of filing: 04.07.1995
(51) Int. Cl.: G06E 3/00

(54) **Optical lateral inhibition in neural networks**

(30) Priority: 15.08.1994 IE 940637
(71) Applicant: HITACHI EUROPE LIMITED, Maidenhead, Berkshire, SL6 8YA (GB)
(72) Inventor: Horan, Paul, Dublin 6 (IE)
(74) Representative: Weldon, Michael James

(57) **Abstract**

In a network layer (1), each node (2) has a modulator (3) and a detector (5) interconnected by a current gain circuit. The modulator (3) is of the type such that reflectivity decreases with increasing illumination of the detector (5). Input light impinges on the modulator (3) and reflected light provides the layer output and lateral inhibition signals to neighbouring nodes. Therefore, as lateral inhibition increases the output signal decreases.

## Description

The invention relates to a neural network layer comprising a plurality of nodes, each node comprising a light output means, means for distributing outputted light to neighbouring nodes of the layer as a lateral inhibitory signal, and an associated light detector comprising means for inhibiting the node upon detection of light.

It has long been recognised that lateral inhibition in networks is important as it helps to model biological functions such as natural vision. In image processing, responses which are achieved include spatially bounded clustering and edge enhancement of the input pattern.

Because of their dense and recurrent nature, networks having lateral inhibition are not amenable to implementation on serial computers and parallel implementation is preferably, particularly if optical.

A neural network layer having optical lateral inhibition is described in the Anonymous 2244 Research Disclosure Document (1991) September No. 329, Emsworth, GB. In this document, a description is given of a neural network layer in which nodes appear to receive an electrical input to become active. Lateral inhibition is optical, via a transmission medium and a convex reflective surface. It appears that the output is provided electrically. The detector (light sensitive device) operates to "inhibit the neuron from becoming active whenever light is detected". While it is difficult to comment on effectiveness of this structure because it is described in very general and vague terms, it does appear to suffer from the disadvantages of using light signals only for inhibition, and of requiring a high power input locally at nodes by virtue of the fact that light sources are used. It would therefore appear to have limited potential for use in dense networks with large parallelism.

Optical lateral inhibition is also described in the paper "Lateral inhibitory action in an optical neural network using an internal-light-coupled optical device array", by W. Kawakami and K. Kitayama, Optics Letters/VOL.16, No. 13/July 1, 1991, and the paper "Two-dimensional optical lateral inhibitory neural network" by W. Kawakami and K. Kitayama, Tech. Digest of Optical Computing '90 (OSA, 1990). In these arrangements, the input to the layer is optical. However, the light output means is again a light source which is switched on and off according to the lateral inhibition. There would appear to be limited versatility in operation as there is only nearest-neighbour inhibition and the inhibition causes on/off states of the light source. As the light output means are light sources, there appears to be limited scope for increased network density due to the extent of local power consumption at nodes and associated heat dissipation.

The invention is directed towards providing a neural network layer which provides optical lateral inhibition in a relatively simple manner.

Another object is that the layer is capable of being much larger than has heretofore been the case, with the ability to provide hundreds of nodes without power consumption problems.

A still further object is that the layer provide versatility in its operating characteristics.

The invention is characterised in that,
the light output means comprises modulators mounted to receive input encoded light signals to the layer;
each modulator has an output characteristic whereby an output light signal encoding parameter value decreases with a corresponding increase in light incident on the associated detector; and
the light distribution means comprises means for distributing part of the light outputted from the modulator to detectors of neighbouring nodes as the lateral inhibitory signal, and for directing part of the light emitted from the modulator to provide a layer output light signal.

Accordingly, the layer does not use power sources and there is limited power consumption locally, at the nodes. Use of modulators also provides for versatility, with a wide range and effectively infinite adjustment of lateral inhibition. Far-neighbour inhibition is also achieved easily with this arrangement.

In one embodiment, the encoding parameter is intensity.

Preferably, the modulators are reflective.

In one embodiment, the modulator is a quantum well modulator, and preferably is in a resonant optical cavity.

In another embodiment, the encoding parameter is intensity and the modulator is connected to receive a current from the detector in proportion to light incident on the detector, and comprises means for operating at a self-linearised wavelength to have a characteristic providing increasing absorption with increasing current characteristic. In this embodiment, the modulator may be of the Fabry Perot type having a reflectivity of greater than 30% for high throughput and a contrast ratio greater than 10:1.

In one embodiment, the electrical connection between the detector and the modulator comprises a current gain means.

Preferably, the current gain means comprises a current mirror circuit comprising means for varying the current gain.

In one embodiment, each node comprises a pair of detectors connected to provide a differential input to the modulator. In this embodiment, the layer may comprise means for directing part of the light input signal to one detector, the light distribution means directing the inhibitory signal to the other detector.

In one embodiment, each node comprises a pair of modulators connected to provide a differential output.

In one embodiment, the layer further comprises means for subtracting input light from the output light of the layer. In this embodiment, said subtracting means may comprise a partially reflecting mirror mounted to reflect part of the input light, and a detector/modulator pair in which the detector is mounted to detect reflected light from the partially reflecting mirror and the modulator is mounted to detect the output light from the node modulators, the final output being provided at an output from the additional detector/modulator pair.

In another embodiment, means are provided for feeding part of the output back to the input. In this embodiment, the feedback means amy comprise an input modulator array in the path of the input light signals and an output detector array in the path of the output signals to provide the recurrent feedback to the modulators.

The invention will be more clearly understood from the following description of some embodiments thereof, given by way of example only with reference to the accompanying drawings in which:-
Fig. 1 is a schematic representation illustrating operating principles of a neural network layer of the invention;
Fig. 2 is a diagrammatic representation of a node of a layer, in this embodiment based on an SL-SEED configuration;
Fig. 3 is a graph showing transfer curves illustrating lateral inhibition at a node;
Fig. 4 is a set of graphs illustrating input, inhibition and output signals at nodes for simple edge enhancement;
Fig. 5 is a plan view illustrating the implementation of the neural network layer in more detail;
Fig. 6 is a circuit diagram of a current gain circuit of the layer;
Fig. 7 is a graph illustrating modulator reflected signal as a function of detector photocurrent for different gain circuit settings in the layer;
Fig. 8 is a graph illustrating the relationship between modulator current and control current and between reflectivity and control current in the layer;
Figs. 9(a) to 9(d) inclusive, are diagrams illustrating operation of the layer;
Fig. 10 is a diagrammatic perspective view of an alternative construction of node of a neural network layer of the invention;
Fig. 11 is a perspective diagrammatic view showing a further construction of layer of the invention; and
Fig. 12 shows a still further layer of the invention, and Fig. 13 shows response of the layer to an input.

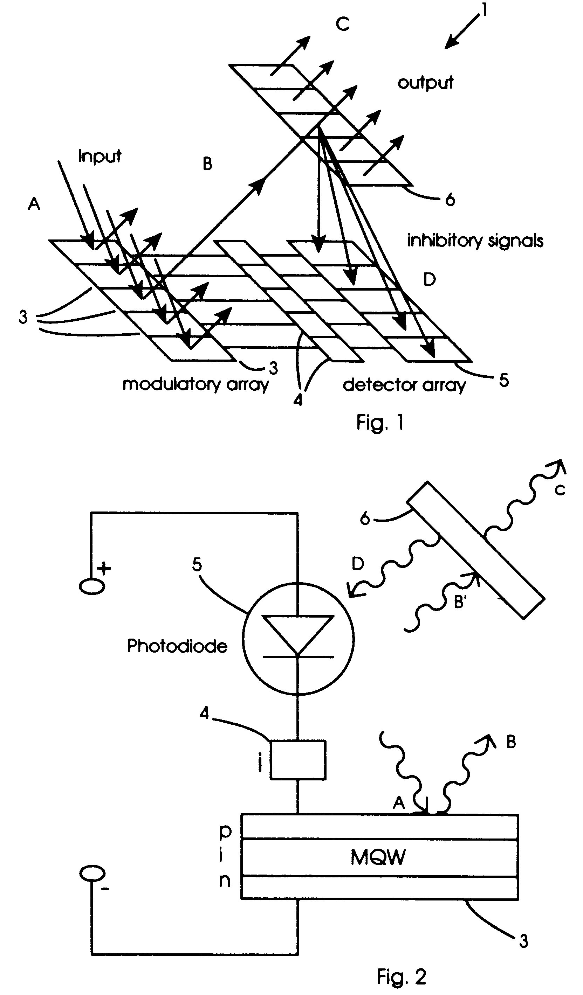

Referring to the drawings, and initially to Fig. 1 overall construction of a neural network layer of the invention is shown and indicated generally by the reference numeral 1. Any desired number of the layers 1 may be arranged to provide a full neural network structure. The layer 1 has optical inputs and outputs and also optical lateral inhibition whereby inhibitory signals are communicated between nodes using optic signals alone. Electrical signals are used only within nodes. The optical lateral inhibition extends to both near and far-neighbour nodes in the layer. This is achieved without the need for light sources in the nodes and the consequent high power dissipation in the nodes.

In the nodes of the layer 1, the light output means is a modulator 3. Each node comprises a modulator 3 connected by an electrical circuit 4 to a detector 5, and an optical element 6.

The arrowed lines in Fig. 1 illustrate the light signals. Encoded input light signals A are directed to the modulators 3. Outputted light signals B from a modulator 3 are directed to the associated optical element 6. At this element, refracted light signals C provide the output light signals for the layer 1. However, reflected light signals D are directed to detectors 5 of neighbouring nodes 2 as recurrent lateral inhibitory signals. Each modulator 3 is of the type which has decreasing output with increasing signal received from its associated detector 5. Accordingly, the greater the intensity of the inhibitory signal D detected at a detector 5, the lower is the outputted signal B of its associated modulator. Accordingly, the output signal C is lower.

While this general operational description applies to a particular construction of layer 1, in which modulator/detector pairs are in an SL-SEED configuration, it also applies to many different embodiments. Some of these alternative embodiments are described at the end of this description.

Referring now to Figs. 2 to 9, the layer 1 is now described in more detail. Each modulator 3 is of the asymmetric Fabry-Perot (AFPM) quantum well type arranged in a self-linearised self electro-optic effect configuration (SL-SEED). Quantum well modulators provide good electronic integration and may be manufactured with standard VLSI processing. Further, the operational wavelength matches that of many detectors and laser sources. Further, as each modulator 3 has quantum wells in a resonant optical cavity, they use an absorption change to change resonance, thereby providing very good contrast.

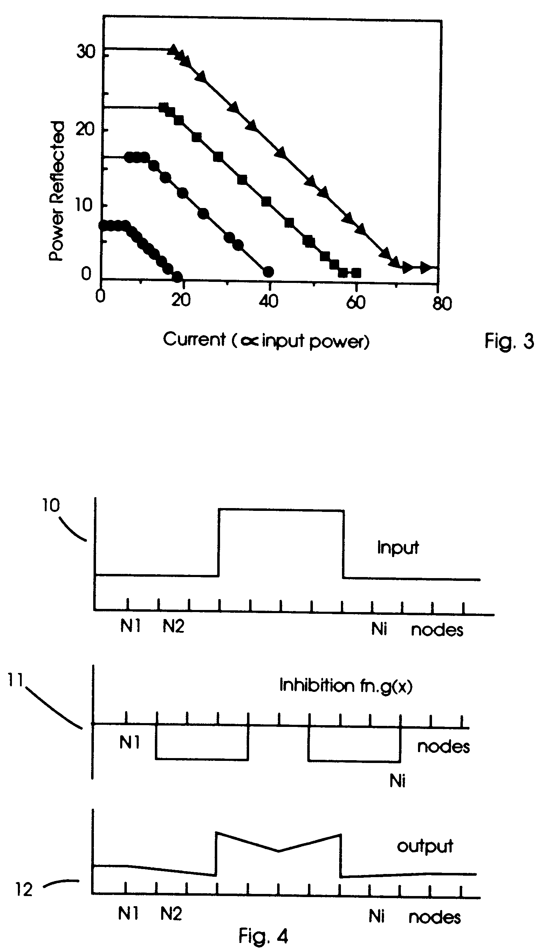

The node 2 is shown in more detail in Fig. 2 and the general response is shown in Fig. 3. The detector 5 is a photodiode acting as a voltage independent current source. This is connected in series with the modulator 3 via the circuit 4, which is a current gain circuit. The modulator 3 in this arrangement operates below the exciton bandedge in which the modulator absorption and photocurrent increase with increasing applied field. The modulator 3 has a relatively high throughput by virtue of an ON reflectively of greater than 30%. Further, it has a moderate contrast ratio of in the range 10:1 to 100:1. If the photocurrent generated in the modulator 3 is different than that set by the light falling on the detector 5, a voltage will rise across the modulator 3 causing the absorption/reflectivity to change until the photocurrents are equalised. As shown in Fig. 3, the flat response at low currents is due to the modulator internal diode potential which initially resists charging. Once this is overcome, the reflectivity decreases linearly with increasing photodiode current. When maximum absorption is achieved, the modulator current may increase further. The individual curves shift to the right with increasing optical power levels, but the slope remains constant, illustrating that the effect is independent of power.

Because the detectors 5 have a lower incident light than the modulators 3 as some of the light is taken for output and there are losses, it is advantageous to provide current amplification between the two devices so that the currents in both devices are equal. The need for such current gain is minimised by use of a high reflectivity modulator 3. Indeed, it is envisaged that in some cases such as for weak inhibition, there may be no need for a circuit 4. Alternatively, the responsivity of the modulators may be modified to produce less photocurrent.

It will be appreciated that the internal state of each node, which may be identified with the modulator reflectivity is determined solely by the neighbours and is not dependent on the input to that particular node, although the final output is. This signal path geometry effectively results in a convolution of the input with the lateral interconnection function. The graph of Fig. 4 shows the results of a typical simulation with flat lateral inhibition g(x) over +/-3 nodes. The input signals are indicated by 10, the inhibition by 11, and the output by 12. A periodic boundary condition is imposed to avoid edge effects. In this example, the layer performs a simple edge-enhancement function, as is clear from the output signal 12.

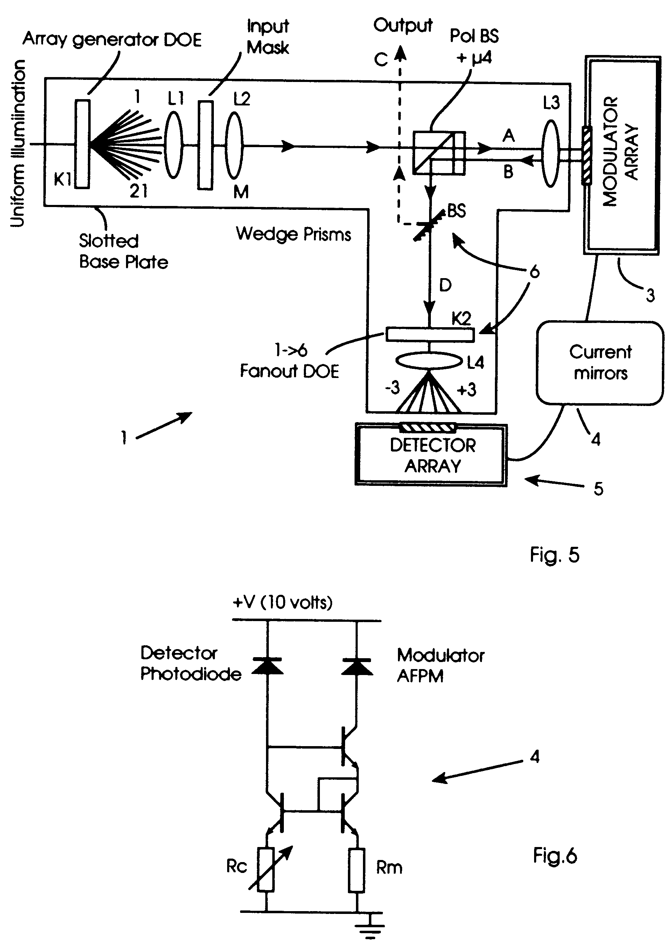

Referring now to Figs. 5 to 9 in particular, construction of the layer 1 is shown in more detail. It must be appreciated that this is a laboratory set-up and it is envisaged that in applying the invention a wide range of alternative implementations may be used. The quantum well modulators 3 are configured in an asymmetric Fabry-Perot optical cavity having a relatively high front surface reflectivity of 30%. The use of a resonant optical cavity results in an enhanced modulation ratio, typically greater than 15. Accordingly, the OFF reflectivity can be made very small, theoretically zero but typically smaller than 5%. The operating wavelength is 857nm, which is longer than that corresponding to the GaAs/AlGaAs bandedge, providing an increasing responsivity with bias to provide self-linearisation. Each linear array of modulators and detectors consists of 21 rectangular devices.

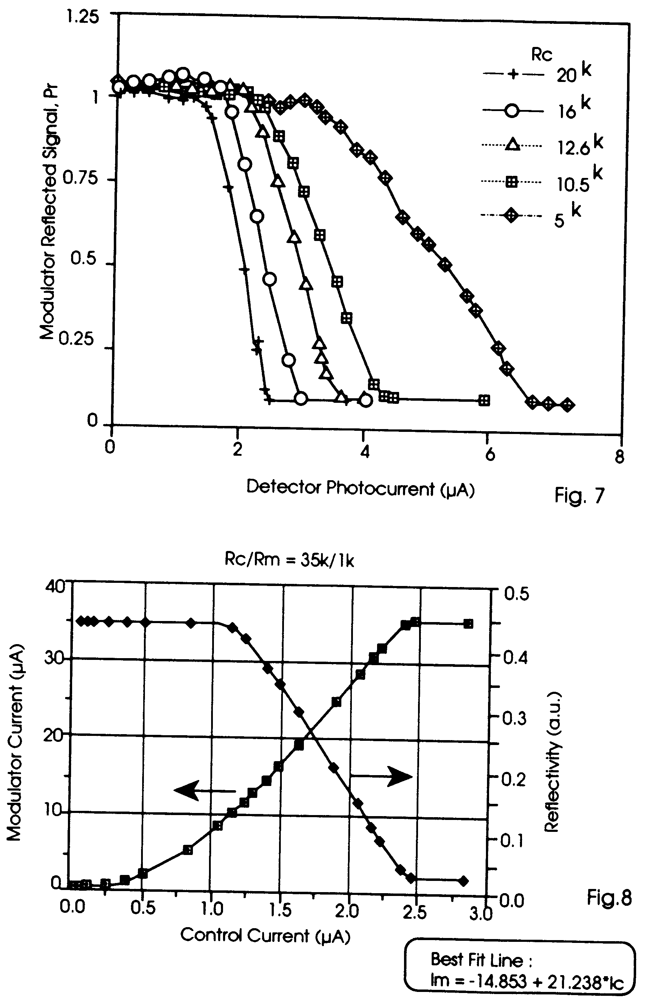

As shown in Figs. 5 and 6, the circuits 4 are of the Wilson Current Mirror type having a variable resistor Rc, allowing the gain to be adjusted. To illustrate operation of the current mirror 4, Fig. 7 illustrates the detector-modulator transfer curve at a variety of gain levels. In addition to providing current amplification, each mirror circuit is also used to maintain the detectors 5 at a constant responsivity - thereby isolating them from the electrical state of the paired modulator. Another problem which is overcome by the current mirrors 4 is that of connecting the modulators and detectors in series, as a direct series connection would not be possible because they are made with a common n-doped substrate in this arrangement. Fig. 8 shows a reflectivity/control current curve, and a modulator current/control current curve for a ratio of Rc/Rm = 35k/1k in the circuit 4. This demonstrates how the reflectivity decreases linearly with increasing photocurrent.

Referring again to Fig. 5, an array generator K1 is used at the input to receive uniform illumination. This has a 16-level kinoform with a rectangular cell structure. The period of the array generator K1 is 1 mm and it has a measured efficiency of 81% and an array non-uniformity of +/- 7%. The measured grating transmission (the ratio of each individual transmitted beam intensity to that of the incident beam) is in the range of 0.020 to 0.030. An interconnect element K2 for directing the signal D to the detector array 5 is also a 16-level kinoform structure. In K2, a grating design having a period of approximately 720 µm is used which generates six ON beams, (i.e. +/- 1, +/- 2, and +/- 3 orders) embedded within a 1 x 39 order signal window with OFF orders 0, +/- 4, +/- 5, ...... +/- 19 suppressed to less than 5% of the ON beam. This prevents self-inhibition and keeps the number of nearest neighbour connected cells to 3. The diffraction efficiency into the ON beams in this case is 60%, with a non-uniformity of +/-1%. Both of the elements K1 and K2 are fabricated in fused silica using standard electron-beam and photo-lithographic techniques, following by reactive-ion etching.

A pair of lenses L1 and L2 are mounted on each side of an input mask M which contains the input pattern. The light signals A are fanned out onto the modulators by a lens L3. A small fraction of the optical signal from the modulators 3 is used as the output C as directed by a half-wave plate and polariser which provide variable attenuation to allow the throughput of the layer to be adjusted and thereby controlling the losses to the detector array. The optical element 6 also comprises the diffractive fanout device K2 which distributes the inhibitory signals.

The input mask M positioned at the L1 Fourier plane selects the input pattern to encode the input according to intensity. This is relayed by the lenses L2 and L3 onto the modulators 3.

The grating K2 provides the 1-to-6 fanout. To avoid interference effects when coherent beams fall onto the same detector 5, the extended length of each device has been used. The spots are inputted along the diagonal of the modulator array so that when they are fanned out, each falling onto a different portion of the detector array. As both sets of devices have the same orientation, the spacing of spots onto the modulators is √2 times that onto the detectors. Currents generated by the signals on the six adjacent cells are summed by each detector and this in turn reduces the reflectivity of its paired modulator by a proportional amount according to the self-linearisation transfer curve. Once the system stabilises, on a timescale determined by the electrical response, the final solution may be read from the modulator array.

When the gain is less than 20, non-linearity in the circuits 4 is present only below detector currents of 1µA and can be neglected as the transfer curve is flat at low currents. Therefore, linearity is preserved and the gain is proportional to the resistance R_{C}. It is also possible to achieve sharp thresholding at high gain values.

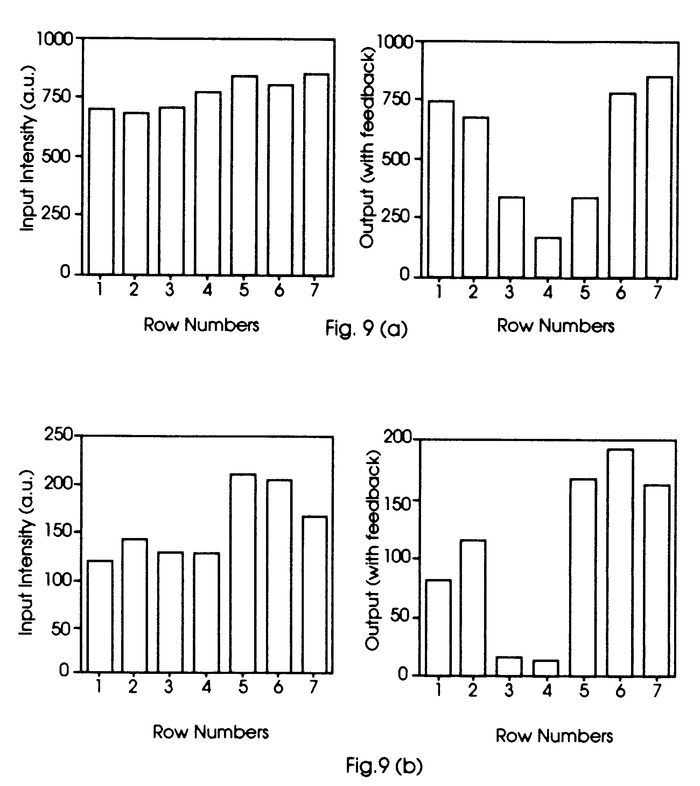

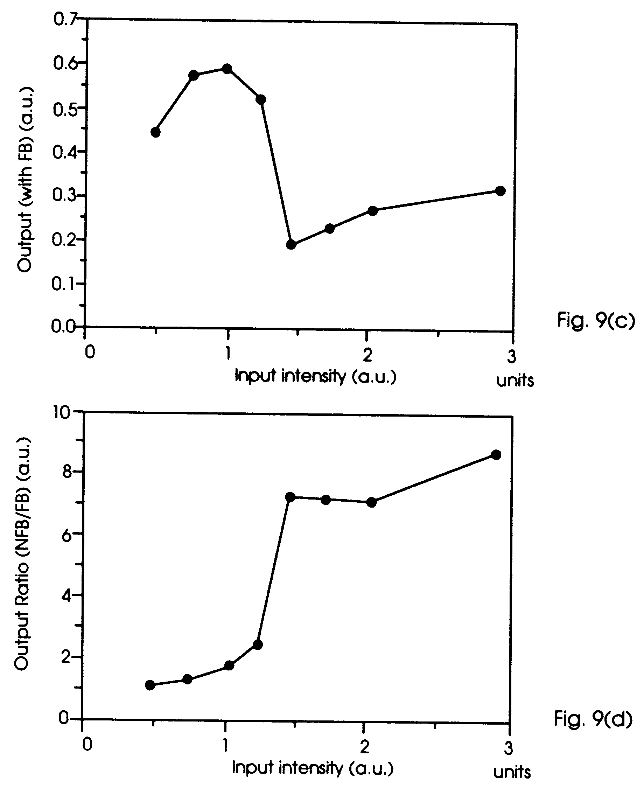

A photographic slide mask M, at the first Fourier plane i.e. between L1 and L2 selects the input pattern which is imaged directly onto the modulator array. This sets the intensity coding. Two such patterns and their resulting outputs with inhibitory feedback are shown in Figs. 9(a), and 9(b). When the input is a row of seven uniform beams, as shown in Fig. 9(a), the centre node will see maximum inhibition followed by its nearest neighbours. The sidemost nodes see the least inhibition and in this case do not reduce their output due to the thresholding nature of the transfer curve. The size of the edge enhancement is essentially limited by the contrast ratio of the modulator. A step input pattern results in a large reduction in reflectivity of the modulators nearest the step, as expected.

The time response of the system is limited by the RC of the discrete circuitry. For the particular devices and circuits used, inhibited nodes settle to a steady output in less than 100µs after the feedback is enabled. No attempt has been made to optimise the speed.

To investigate the intensity dependence of the output, the flat input pattern of Fig. 9(a) was used. The intensity of the centre node (most inhibited) was measured as the total input intensity to the system was increased and the result is depicted in Figs. 9(c) and (d). Fig. 9(c) shows intensity dependence of the edge enhanced output. Fig. 9(d) shows the output without feedback divided by that with detector feedback. Referring to Fig. 9(c), at low intensities the output is directly proportional to the input as there is insufficient photocurrent to overcome the modulator built-in field. At higher input levels, the subtraction effect is apparent as the output power decreases linearly (in this case the decrease is sharp because the gain value is high i.e. 20). Once the modulator has reached its maximum absorption the ratio of the input intensity with no feedback, I_{NFB}, to the output with feedback, I_{FB}, levels off. There is a small change in slope as the nodes on either side of centre also reach their minimum levels. The ratio of output with no feedback to that with feedback indicates the reduction factor of the centremost pixel compared to the edges which remain uninhibited.

Insertion losses of 2dB and a contrast ratio of >10 at 857nm was achieved over an array of 21 devices. Variations in these parameters change the modulation and detection efficiencies. It is possible to overcome this by trimming the gain values of individual nodes. To do this, the fanout grating, K2, can be removed so that each node inhibits itself. With a uniform input beam, the output can be made uniform by small changes in the gain value. It should be noted that in the above results, gain trimming was not used as the overall system uniformity was high. For the diffractive optics the important parameters are uniformity of the input beams, and for the fanout grating, the diffraction efficiency and side order suppression. Although crosstalk is the principle on which lateral inhibition is based, unwanted crosstalk, for example, due to reflections or unwanted diffraction orders can contribute to device noise. It is advantageous that the flat portion of the transfer curve renders the system relatively insensitive to these latter effects.

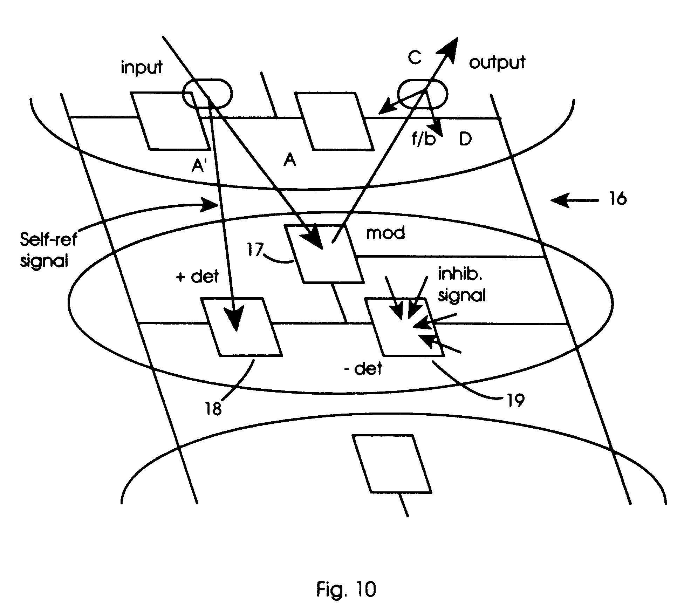

Referring now to Fig. 10, an alternative construction of node 16 is shown. The node 16 has a modulator 17 which is connected to a pair of detectors 18 and 19. In this arrangement, part of the input signal as indicated by the arrowed line A' is directed to the detector 18, while the lateral inhibition signals B are directed to the second detector 19. The differential signal for the modulator is tapped off between the two detectors. In this arrangement, the lateral inhibition signal is reduced by the input to implement subtraction. Thus, the modulator reflectivity is dependent on the input, as well as neighbouring outputs. More complex mathematical functions are possible. In this embodiment, it is important to ensure that the detector signals are such as to maintain a reverse bias across the modulator.

It is also envisaged that a differential modulator arrangement may be used, in which case low-contrast and less expensive modulators may be used.

It will be noted from the output signal 12 shown in the graph of Fig. 4 that the result of a single stage inhibition is basically a reduced scale version of the original input with some small perturbations representing the processing. Accordingly, it will be appreciated that if the original input is subtracted from the output, then the processing can be enhanced.

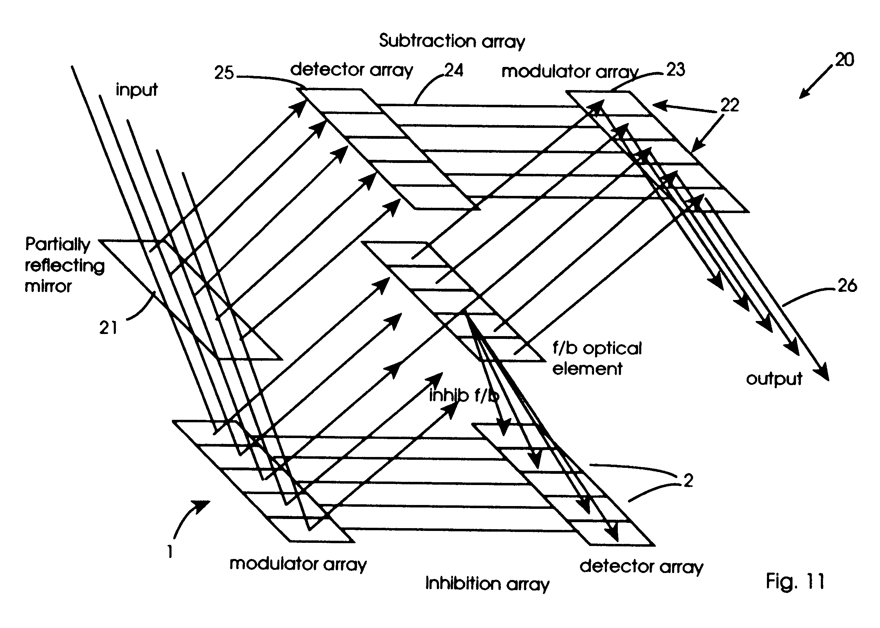

Referring now to Fig. 11, a layer 20 is shown which achieves this effect. The layer 20 includes the components of the layer 1 and parts similar to those described with reference to the previous drawings are identified by the same reference numerals. In addition, however, there is a partially reflecting mirror 21 mounted in the path of the input light signals. There is also a set of detector/modulator pairs 22 optically connected with the mirror 21. These elements are mounted so that the detectors 25 of each pair 22 are mounted to detect reflected light from the input signal of an associated node 2. A current path is on an interconnecting conductor 24 to the associated modulator 23, this current being linearly related to the illumination on the detector 25. The modulators 23 are mounted in the path of what was previously output light signals, the output light signals 26 for the system 20 being the reflected light from the modulators 23. So, in the system 20, the same principles of operation of the detector/modulator pairs 2 have been used in order to subtract the input from the output. The greater the reflection from the mirror 21 onto the detectors 25, the smaller is the output signal 26. This results in an enhanced, if small, output. This output could form the input to a further processing stage, such as a winner-take-all layer.

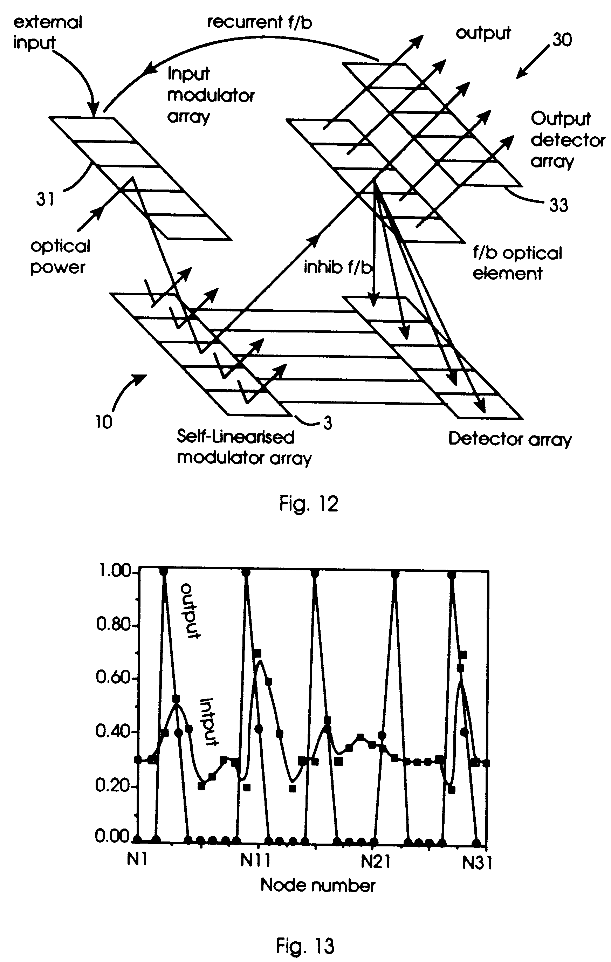

Referring now to Fig. 12, a layer 30 is described in which there is a recurrent feedback of the output to the input to provide winner-take-all behaviour. The layer 30 has a second modulator array 31 which is uniformly illuminated to present the external inputs. The arrangement is such that the modulated beams are then directed to the modulators 3 as described above. However, a major difference is that the output is monitored and is used to control the input modulator 31 (which may alternatively be a light source) to establish a recurrent loop. This is achieved by use of an output detector array 33 connected to provide a control signal to the input modulator array 31. The feedback signal may indicate the source of the input signal. In operation, all that is required is that the input is presented for a sufficient time for the feedback loop to be established, and thereafter the input is removed and the system converges to a stable state.

In an optical system, global interconnection leading to a single winning node is not feasible as only finite optical power is available in a network of a realistic size and there is lateral interconnection with neighbouring nodes only. Accordingly, local winners will arise, one per neighbourhood as defined by the range of interconnection. It has been found that in each neighbourhood or cell there would be a winner, even if the input in that area is perfectly uniform. This arises because small spurious variations arise during the iteration process, which become amplified, eventually giving a winner. The graph of Fig. 13 shows an example of an input and the result that this simulation converges upon. As can be seen, local maxima are located, but a spurious peak also occurs around node N22. Such a system could form an important part of a self-organising network, possibly when prefixed by a Hebbian network. The problems of spurious peaks arising from positive gain in the feedback could be ameliorated by introducing a non-linear feedback function. For example, if a sigmoidal gain function were used, signals left of the point of inflection value would experience loss and so be damped, and only signals larger than the threshold set by the inflection value will grow.

A further non-linearity is introduced in shunting networks where the lateral inhibition signal is modulated (multiplied) by the value of the node. An optical implementation is envisaged whereby the inhibition optical signal is reflected from the node modulator before detection. This would necessitate a more complex optical arrangement. It should be noted that this would not correspond directly to the conventional shunting network as, in this case, the inhibition signal is being multiplied by the modulator reflectivity rather than the signal state variable generally used.

It will be appreciated that the invention provides a very simple way of achieving extensive optical lateral inhibition as only readily available components are used. Power sources are not used, and so the layer has the potential to be built very large without local power consumption at nodes and attendant heat dissipation. Another very important aspect is that there is a large degree of versatility in operation of the layer - as effectively infinitely variable outputs and inhibition intensities being possible.

The invention is not limited to the embodiments described. For example, the modulator may be transmissive rather than reflective, although in this case suitable light-transmitting substrates would be required. Such modulators could be used in an SL-SEED configuration with little modification of the described embodiments. However, they could also be used in alternative configurations such as a liquid crystal on silicon or a GaAs flip-chip bonded to silicon arrangement.

Further, the modulators may be driven to respond to input signals encoded according to frequency or polarisation parameters rather than by intensity, as described above.

While inhibition is achieved completely optically as described above, it is envisaged that electronic signals may be used for some inhibition. For example, they may be used for global inhibitory signals such as resets, or for near-neighbour inhibition with optics for far-neighbours. This would maximise use of available optical power.

Any suitable electronic circuit could be used for connecting the modulators to the detectors, perhaps giving a non-linear response, provided the modulator output decreases as the detector signal increases. For example, the photodetector response may be used as a voltage input to a conventional amplification transistor or circuit, which varies the voltage across the modulator - giving a non-linear response. Alternative technologies could be used instead of the SL-SEED arrangement, for example, liquid crystal on silicon. In this example, the encoding parameter value would be polarisation. Changing this parameter value would involve changing the ratio of two orthogonal polarisation directions.

Instead of separate linear arrays for modulators and detectors, the modulators and detectors may be combined in a single unit, and furthermore these units can be integrated into a two dimensional array of units, perhaps with local electronics in each node. Integrated optics could be used to provide a more compact arrangement. For example, opto-electronic device arrays could be made using lithographic techniques on a µm to mm scale, and similar techniques could be used to make complimentary integrated optical elements.

The optical element which provides the inhibitory signals may alternatively be holographic, for example.

## Claims

1. A neural network layer comprising:-
a plurality of nodes, each node comprising:-
a light output means, and
an associated light detector comprising means for inhibiting the node upon detection of light; and
means for distributing light from the output means to detectors of neighbouring nodes of the layer as recurrent lateral inhibitory signals,
characterised in that,
the light output means comprises modulators mounted to receive input encoded light signals to the layer;
each modulator has an output characteristic whereby an output light signal encoding parameter value decreases with a corresponding increase in light incident on the associated detector; and
the light distribution means comprises means for distributing part of the light outputted from the modulator to detectors of neighbouring nodes as the lateral inhibitory signal, and for directing part of the light emitted from the modulator to provide a layer output light signal.

2. A layer as claimed in claim 1, wherein the encoding parameter is intensity.

3. A layer as claimed in claims 1 or 2, wherein the modulators are reflective.

4. A layer as claimed in any preceding claim, wherein the modulator is a quantum well modulator.

5. A layer as claimed in claim 4, wherein the quantum well is in a resonant optical cavity.

6. A layer as claimed in any of claims 3 to 5, wherein the encoding parameter is intensity and the modulator is connected to receive a current from the detector in proportion to light incident on the detector, and comprises means for operating at a self-linearised wavelength to have a characteristic providing increasing absorption with increasing current characteristic.

7. A layer as claimed in claims 5 or 6, wherein the modulator is of the asymmetric Fabry Perot type having a reflectivity of greater than 30% for high throughput and a contrast ratio greater than 10:1.

8. A layer as claimed in any of claims 4 to 7, wherein the electrical connection between the detector and the modulator comprises a current gain means.

9. A layer as claimed in claim 8, wherein the current gain means comprises a current mirror circuit comprising means for varying the current gain.

10. A layer as claimed in any preceding claim, wherein each node comprises a pair of detectors connected to provide a differential input to the modulator.

11. A layer as claimed in claim 10, further comprising means for directing part of the light input signal to one detector, the light distribution means directing the inhibitory signal to the other detector.

12. A layer as claimed in any preceding claim wherein each node comprises a pair of modulators connected to provide a differential output.

13. A layer as claimed in any preceding claim further comprising means for subtracting input light from the output light of the layer.

14. A neural network layer as claimed in claim 13 wherein said subtracting means comprises a partially reflecting mirror mounted to reflect part of the input light, and a detector/modulator pair in which the detector is mounted to detect reflected light from the partially reflecting mirror and the modulator is mounted to detect the output light from the node modulators, the final output being provided at an output from the additional detector/modulator pair.

15. A network layer as claimed in any preceding claim, wherein means are provided for feeding part of the output back to the input.

16. A network layer as claimed in claim 15, wherein the feedback means comprises an input modulator array in the path of the input light signals and an output detector array in the path of the output signals to provide the recurrent feedback to the modulators.
